Europäisches Patentamt

European Patent Office

Office européen des brevets

(11) Publication number: **0 249 673**

A1

## (12) EUROPEAN PATENT APPLICATION

(21) Application number: 86830338.9

(22) Date of filing: **10.11.86**

(51) Int. Cl.4: **F16K 31/58** , F16K 11/00 , E03C 1/042

The title of the invention has been amended (Guidelines for Examination in the EPO, A-III, 7.3).

(30) Priority: **04.12.85 IT 4887585**

(43) Date of publication of application: **23.12.87 Bulletin 87/52**

(84) Designated Contracting States: **AT BE CH DE ES FR GB GR LI LU NL SE**

(71) Applicant: **R.B. RACCORDERIE BRESCIANE S.r.L.**
**Via G. di Vittorio**
**I-25030 Roncadelle (BS)(IT)**

(72) Inventor: **Bottura, Cesare**
**Raccorderie Bresciane S.r.l. Via G. Di Vittorio**
**I-25030 Roncadelle (BS)(IT)**
Inventor: **Tripoli, Mario**
**Raccorderie Bresciane S.r.l. Via G. Di Vittorio**
**I-25030 Roncadelle (BS)(IT)**

(74) Representative: **de Simone, Domenico et al**
**Ing. Barzanò & Zanardo Roma S.p.A. Via Piemonte 26**
**I-00187 Roma(IT)**

(54) **Swinging offtake switching manifold device for fluids.**

(57) A switching-manifold device for fluids made up of a main duct length (1) provided at its two ends with means (2,3) for coupling the same with further duct lengths, and of at least one orientable branch member made up of an inside threaded sleeve (8) coupled with said main duct length (1) and provided with at least one outlet hole (9), and of an outer jacket member (4) which is closed at the top and is mounted so that it can rotate about said sleeve (8), and which is provided with an outlet pipe length (14) and with at least one inside groove (10) for the fluid flow, some seal means (11) being also provided between said jacket member (4) and said main duct length (1).

Fig. 2

## A SWINGING OFFTAKE AXIS SWITCHING-MANIFOLD DEVICE FOR FLUIDS

The present invention relates to a switching-manifold device for fluids which comprises a main body provided at its ends with means for coupling the same with the main duct or with another similar manifold, a switching member communicating with the main duct and having an outlet port for its connection with switching duct lengths and means for adjusting the fluid flow switching through said switching member.

The object of the present invention is to supply a switching-manifold device of the type mentioned above which has on the main length of the duct one or more deviations which, rotating about an axis at right angles to the axis of said main duct, allow branches to be obtained in realizing the plant which are arranged in any direction so that plants can be obtained which are more practical and simpler to install.

It is well known that various devices have been suggested in the past years aiming principally at simplifying in a remarkable way the realization of switching plants for fluids in general, and more particularly for water conveyed in home systems.

For instance, manifolds have been suggested which are substantially made up of a length of main duct in which a branch is arranged or two coaxial branches are placed oriented in opposite directions and provided with valves.

One of the features of such type of manifold is that of being suitable for coupling with other similar manifolds so that a switching "box" can be realized, for example both for hot and cold water, said switching box being compact and functional.

In spite of that, such manifolds have a number of drawbacks both of practical and of functional type, which make the use of said manifolds quite difficult under some conditions.

Indeed, it is to be observed that the fact of orienting the two branches in opposite directions compels the installer to observe very accurately the various components to be connected to the main duct. In case it is necessary to connect components which are all arranged on the same side with respect to the main duct, the second branch is to be eliminated if such type of manifold is employed so that the manifold itself is employed only partially, or otherwise it is necessary to cause the branch pipes to bend so that the installation work becomes more complex and in addition remarkable pressure drops occur.

Thus, it is clearly evident from the above that there is a need for a switching-manifold device for fluids such as that suggested by the present invention, which device provides a branch which can be oriented through 360°, so that no installation problems occur, and very low pressure drops are introduced in the plant.

Moreover, it is an object of the present invention that of supplying a modular switching-manifold device for fluids which can be coupled with additional switching-manifold devices so that the necessary number of deviations can be prearranged.

It is a further object of the present invention that of supplying a switching-manifold device for fluids which is able to provide on a single length of main duct a number of branches higher than one so that the installation problems can be simplified in a remarkable way.

In addition, it is an object of the present invention to supply a switching-manifold device for fluids on which a number of equal orientable branches can be arranged in the vertical direction, which device is particularly suitable for heating systems.

In order to satisfy such needs, according to the present invention a switching-manifold device for fluids is suggested on which at least one orientable branch is provided, said branch being orientable through 360°C.

Accordingly, it is a specific object of the present invention a switching-manifold device for fluids which is made up of a length of main duct provided at its two ends with means for coupling with further lengths of duct, as well as of at least one branching member which can be oriented and consists of an inside threaded sleeve coupled with said length of main duct and provided with at least one outlet hole, of an outer jacket member which is closed at the top and is rotatably arranged about said sleeve and is provided with a length of outlet pipe and with at least one inside groove for allowing the fluid to pass, sealing means being provided between said jacket member and said length of main duct.

Preferably, said sleeve having its axis at right angles to the axis of the length of the main duct is realized as an integral piece with the latter and bears two outlet holes for the fluid which are in diametral opposition.

According to a preferred embodiment of the switching-manifold device of the present invention, said outer jacket member is provided with a length of outlet pipe having its axis at right angles to the axis of said sleeve and in addition, a single circular groove is provided along its inside surface in correspondence to said at least one outlet hole of the sleeve.

As already mentioned above, the switching-manifold device according to the present invention can be employed in different types of plants.

To that end, closing means can be provided above said outer jacket member in order to obtain the closing at the top, said closing means be ing fixed or coupled to said inside thread of such sleeve, or otherwise valve adjustment means can be provided, which also can be coupled with said sleeve.

It is clear that sealing gasket means will be provided between said closing means and said outer jacket member.

Preferably, said valve means are made up of a movable or fixed rod screw with a closing member in the form of a ball, of a prop, of a ledge, of a ceramic material or the like.

In the embodiment of the switching-manifold devices for fluid according to the present invention, in which more than one branch member is provided arranged in series along the length of the main duct, the structural features of the device do not change but for the limitations of a functional character which are imposed obviously to the circular arc through which the single branches can be made to rotate with no interferences among the lengths of the outlet pipe.

Anyway, the realizations which are more suitable from a commercial and economic standpoint of the switching-manifold device for fluids according to the present invention are those which provide one or two branches so that it is possible to obtain all possible combinations by putting together the single members.

Again according to the present invention, particularly in the case of heating systems in which the fluid is necessarily distributed vertically, a number of rotatable branching members coupled by means of fixed connection lengths can be arranged in that direction.

In the case of a branch plant with two main feeding pipes for instance hot and cold water, a connection length is provided on one of two said pipes, which length allows an alternate parallel arrangement of the branches to be realized.

The present invention will be disclosed in the following for illustrative but not for limitative purposes with particular reference to the Figures of the enclosed drawings, wherein:

Figure 1 is a side view of the switching-manifold according to the present invention;

Figure 2 is a side view of a longitudinal cross section of said manifold of Figure 1;

Figure 3 is a partially sectioned front view of the manifold of Figure 1;

Figure 4 is a partially sectioned plan view of the manifold of Figure 1;

Figure 5 is a side view of a switching-manifold according to the present invention with two branches;

Figure 6 is a longitudinal cross section view of the manifold of Figure 5; and

Figure 7 is a partial cross section plan view of the manifold of Figure 5.

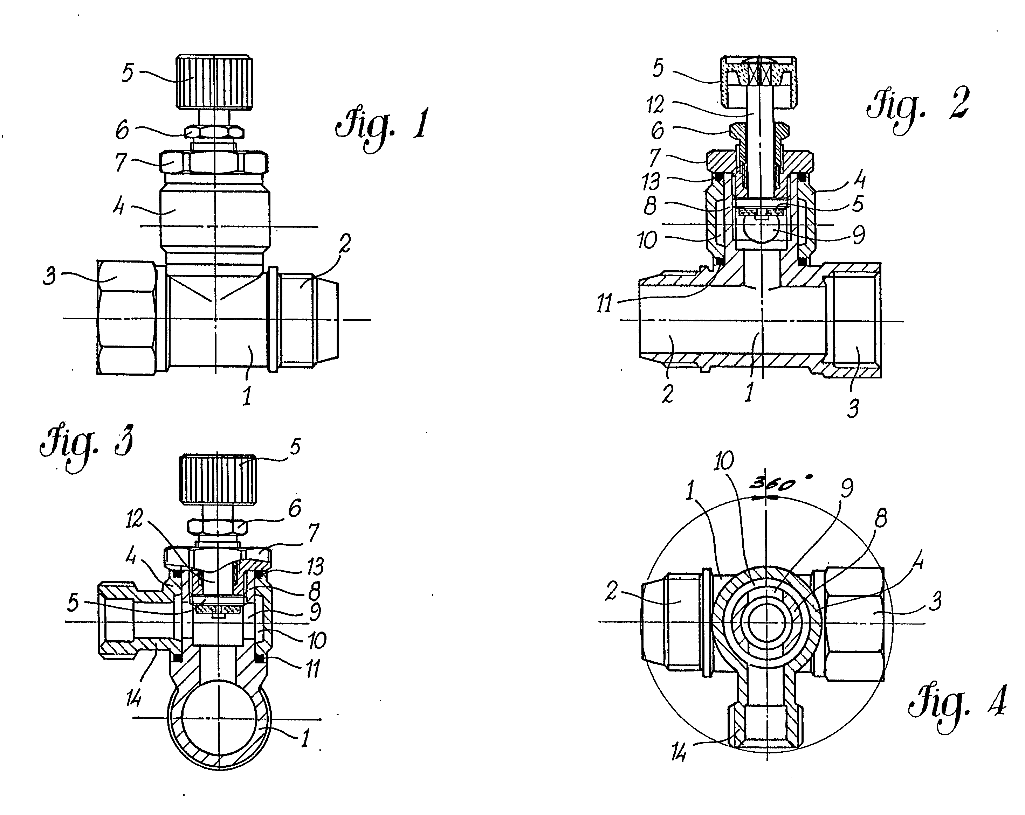

In Figure 1, number 1 points out the main duct length provided at its ends with a male coupling member 2 and a female coupling member 3 for connecting the same with other pipe lengths.

The outer jacket 4, as can be clearly seen, has its axis at right angles to the axis of the duct length 1 so that the orientation of the branch can be obtained on a plane parallel to the middle transversal plane of said main duct length.

The adjustment valve 5 provided above the outer jacket 4 couples centrally, through a screw 6 and a second fastening screw 7, to the inside sleeve, as will be illustrated better in the following with reference to the enclosed drawings.

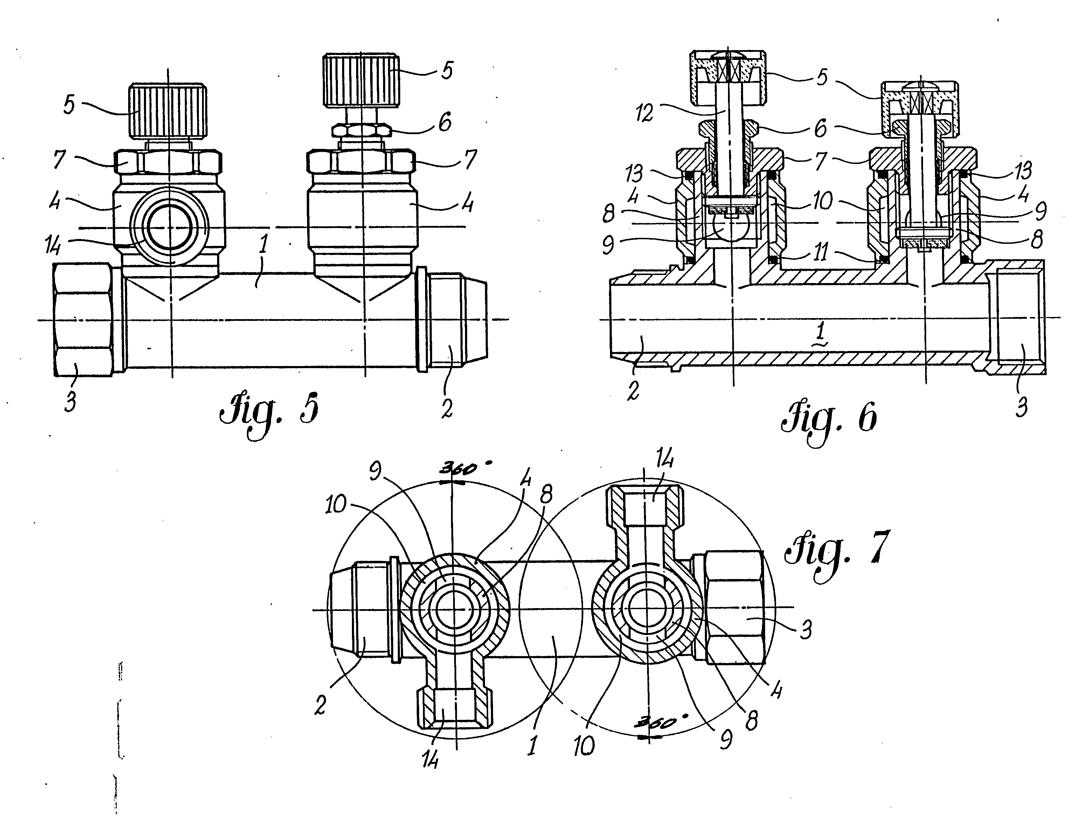

Figure 2 shows the assembling of the switching-manifold device ac cording to the present invention.

A sleeve 8 is provided on the duct length 1, the sleeve axis being perpendicular to the axis of said duct length 1 and provided with the outlet holes 9.

An outer jacket 4 is rotatably arranged on the outer part of said sleeve 8, the circular groove 10 being obtained internally on said jacket 4.

A seal O-ring 11 is arranged between said outer jacket 4 and said main connection length 1.

Said sleeve 8 is threaded internally so that it can couple with the adjustment valve 5 as well as with the fastening screw 7.

As already mentioned above, the screw 6 is provided between the adjustment valve 5 and the fastening screw 7, said screw 6 being arranged coaxially around the stem 12 of said valve 5 and being screwed on a thread provided centrally on the fastening screw 7.

The O-ring 13 is arranged between the fastening screw 7 and the outer jacket 4.

In figure 3, in addition to the members already mentioned above, it can be observed that the branch length 14 is provided on said outer jacket 4 for allowing the fluid to flow, the inside opening of said branch being in correspondence to the groove 10 so that, as said groove is provided at the level of the outlet holes 9 in the sleeve 8, the flow of water always is surely obtained for any position of said length 14 following the rotation of the jacket 4.

The particular assembly of the valve 5, of the screw 6 and of the fastening screw 7 on the sleeve 8 allows the outer jacket 4 with the branch length 14 to rotate freely about said sleeve 8.

In figure 4 it can be seen that said jacket 4, and consequently the branch length 14, can be oriented at will through a 360° arc.

In figures 5, 6 and 7, in which the members corresponding to those shown in Figure 1-4 are pointed out by the same reference numbers, the switching-manifold device embodiment is shown in which two rotatable branches are provided.

It can be first observed that such branches can be employed by means of valve 5 indifferently together, or one only each time or they can be differently partially used.

The main fact to be remarked is that the two branch lengths 14 can be oriented both in opposite directions, as shown in Figure 5, 6 and 7, and in any directions.

More particularly, Figure 7 shows that two branches, particularly if arranged at quite a reduced distance from one another, define an arc of circle along which the two branch lengths 14 can be oriented. Indeed, it is evident that such two branch lengths cannot be arranged coaxially in opposite directions, because the branch pipes would interfer with one another.

The present invention has been disclosed with reference to some of its preferred embodiments, but it is to be understood that modifications and changes can be introduced into the same by those who are skilled in the art without departing from the spirit and scope of the present invention for which a priority right is claimed.

**Claims**

1. A switching-manifold device for fluids, which is made up of a main duct length provided at its two ends with means for coupling the same with further lengths of the duct, said switching-manifold device being characterized in that it comprises at least one orientable branch member which can rotate about an axis at right angles to the axis of the main duct length.

2. A switching-manifold device for fluids according to claim 1, characterized in that said orientable branch member is made up of a sleeve coupled with said main duct length and is provided with at least one outlet hole, as well as of an outer jacket member which is closed at its top by closing means or by valve means and is arranged rotatably about said sleeve and is provided with an outlet pipe length and with at least one inside groove for the fluid flow, some seal means being also provided between said jacket member and said main duct length.

3. A switching-manifold device for fluids according to claim 2, characterized in that said sleeve is provided with two outlet holes for the fluid which are in diametral opposition.

4. A switching-manifold device for fluids according to claim 2, wherein said sleeve has its axis at right angles to the axis of the main duct length.

5. A switching-manifold device for fluids according to claim 2, wherein said sleeve is obtained as an integral piece with the main duct length.

6. A switching-manifold device for fluids according to claim 2, wherein said outer jacket member is provided with an outlet pipe length whose axis is at right angles to that of said sleeve.

7. A switching-manifold device for fluids according to claim 2, wherein said outer jacket member is provided with an inside circular groove placed in correspondence with said at least one outlet hole in said sleeve.

8. A switching-manifold device for fluids according to claim 2, wherein said sleeve is internally threaded.

9. A switching-manifold device for fluids according to claim 2, wherein said closing means are fixed and coupled above said sleeve so as to allow said outer jacket member to rotate about said sleeve.

10. A switching-manifold device for fluids according to claims 2 and 8, wherein said closing means are made up of threaded plug means coupled with the inside thread of said sleeve.

11. A switching-manifold device for fluids according to claims 2 and 8, wherein said valve means are coupled with the thread of said sleeve.

12. A switching-manifold device for fluids according to claim 10 or 11, wherein some seal means are provided between said threaded plug means and said outer jacket member as well as between said valve means and said outer jacket member.

13. A switching-manifold device for fluids according to claim 2, wherein said valve means consist of a movable or fixed rod screw with a ball closing member or a prop or ledge or a ceramic closing member.

14. A switching-manifold device for fluids according to anyone of the preceding claims, characterized in that two series branch members are arranged on said main duct length.

15. A switching-manifold device for fluids according to claim 1 or 2, wherein more than one branch member are provided arranged in the vertical direction.

Fig. 1

5
6
7
4
3
2
1

Fig. 2

5
12
6
7
13
8
10
11
4
5
9
2
1
3

Fig. 3

5
12
4
5
6
7
13
8
9
10
11
14
1

Fig. 4

10
360°
1
9
8
2
3
4
14

0 249 673

Fig. 6

Fig. 7

Fig. 5

## DOCUMENTS CONSIDERED TO BE RELEVANT

EP 86830338.9

| Category | Citation of document with indication, where appropriate, of relevant passages | Relevant to claim | CLASSIFICATION OF THE APPLICATION (Int. Cl.4) |
|---|---|---|---|
| A | US - A - 1 678 377 (F.G.BROTZ) <br> * Totality * <br> -- | 1,2,4-13 | F 16 K 31/58 <br> F 16 K 11/00 <br> E 03 C 1/042 |
| A | US - A - 1 662 620 (E.J.PATELSKI) <br> * Fig. 1-3 * <br> -- | 1,2,4-6,14,15 | |
| A | AT - B - 308 008 (G.SCHMIEDL) <br> * Fig. 1 * <br> -- | 1,2,5,7 | |
| A | DD - B - 124 263 (F.GROHE ARMA-TURENWERK) <br> * Claim 2, line 5; fig. 1,2 * <br> ---- | 1,2 | |

TECHNICAL FIELDS
SEARCHED (Int. Cl.4)

F 16 K 11/00
F 16 K 31/00
E 03 C 1/00
F 16 L 27/00

The present search report has been drawn up for all claims

| Place of search | Date of completion of the search | Examiner |
|---|---|---|
| VIENNA | 29-06-1987 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82